# EUROPEAN PATENT SPECIFICATION

(11) **EP 3 038 846 B1**
(45) Date of publication and mention of the grant of the patent: **26.05.2021**
(21) Application number: 14747394.6
(22) Date of filing: 05.08.2014
(51) Int. Cl.: B60G 17/019

(54) **OPTICAL FIBER SENSOR FOR A VEHICLE WHEEL SUSPENSION**
OPTISCHER FASERSENSOR FÜR EINE FAHRZEUGRADAUFHÄNGUNG
CAPTEUR DE FIBRE OPTIQUE POUR UN SYSTEME DE SUSPENSION DE VEHICULE AUTOMOBILE

(30) Priority: 30.08.2013 EP 13182537
(43) Date of publication of application: 06.07.2016
(73) Proprietor: PSS Consultancy & Equipment B.V., 5993 HB Maasbree (NL)
(72) Inventor: BORGHANS, Hubertus, 5993 HB MAASBREE (NL); MEULENBERG, Rob, NL-5993 HB Maasbree (NL)
(74) Representative: De Vries & Metman
(86) International application number: PCT/EP2014/066822
(87) International publication number: WO 2015/028266

(56) References cited:
- WO-A1-94/24534
- FR-A1- 2 983 954
- GB-A- 2 421 075

## Description

The present invention relates to a vehicle comprising a vehicle body and a suspension including a sensor for detecting vehicle load.

A vehicle including a weight measuring apparatus for detecting vehicle load is known in the art. WO 2009/084824 refers to a conventional weight measuring apparatus in which a strain gauge is attached to a leaf spring of the vehicle in order to measure a change in strain and calculate the shaft weight of the vehicle based on the change.

WO 2009/084824 is related to a vehicle weight measuring system which comprises a leaf spring inclination sensor that is installed on a leaf spring of the vehicle and a reference inclination sensor that is installed on a frame of the vehicle.

FR 2 983 954 is related to a spring including a composite structure comprising reinforcement fibers in a matrix. The composite structure further comprises at least one Bragg cell and at least one optical fiber connected to the Bragg cell.

It is an object of the present invention to provide a vehicle including a robust sensor for detecting vehicle load.

This is achieved by the vehicle according to claim 1.

Such a sensor is relatively low-cost, accurate, reliable and can be placed at a lot of possible locations at the suspension of the vehicle. A light signal that is transmitted through the optical fibre is not influenced by electronic noise signals; this is advantageous in modern vehicles that have an increasing number of electronic devices.

The optical fibre may be bendable upon varying the vehicle load in order to influence a light transmission property relatively simply.

The sensor may be mounted on a surface that is elastically deformable in dependency of vehicle load, wherein the optical fibre has at least a static portion which has a predetermined position with respect to said surface and a resilient portion which is bendable with respect to said static portion. A lot of design configurations are conceivable in order to bend the resilient portion upon elastically deforming the surface to which the sensor is mounted. The static portion may have a fixed position with respect to the surface and may be rigidly attached thereto.

The elastically deformable surface may be bendable in dependency of vehicle load. The sensor may be arranged such that the resilient portion of the optical fibre bends more with respect to the static portion than the surface that is bendable in dependency of vehicle load, hence increasing the sensitivity of the sensor.

The suspension comprises at least a spring and the sensor has one or more rigid portions and one or more resilient portions for bending the optical fibre with respect to the rigid portions, wherein the sensor is located at the spring. The sensor may be sandwiched between the spring and another component of the suspension and/or the vehicle body.

It is noted that the resilient portion(s) of the sensor may be different from the resilient portion(s) of the optical fibre as described hereinbefore. The resilient portion of the optical fibre is bendable with respect to its static portion, whereas the resilient portion(s) of the sensor cooperate(s) with the rigid portion(s) of the sensor in order to bend the optical fibre with respect to the rigid portion(s).

The spring has a vertically oriented centre line. 'Vertically oriented' means that the centre line has a vertical component. The spring may transfer forces between a surface, e.g. a road, and the vehicle body in a direction along the centre line.

An advantageous location of the sensor is at or near a location where the spring is connected to the vehicle body since then wiring from the sensor can be guided to the vehicle body easily. In practice the sensor may be located at an upper end of the spring.

The sensor is accommodated in a spring seat of a coil spring. A coil spring has a relatively large diameter. The relatively large circumference of the seat spring provides significant length for locating the optical fibre of the sensor and providing the rigid portions and the resilient portions. In other words, the optical fibre may extend in circumferential direction about the centre line. The spring seat may be combined with a thrust bearing, for example in case of a McPherson strut.

The optical fibre may be provided with a plurality of rigid objects extending at least partly around, in particular encircling, the optical fibre, wherein more in particular the fibre is provided with beads around the fibre. In this way the static portions and resilient portions along the optical fibre can be formed in an easy way.

The invention is also related to a vehicle suspension for a vehicle as defined in claim 5.

These and other aspects and benefits will hereafter be elucidated with reference to the schematic drawings showing embodiments by way of example.
Fig. 1 is a perspective view of a sensor cable of a sensor for detecting vehicle load of an embodiment of the vehicle according to the invention.
Figs. 2-3 indicate a method of operation of the sensor cable of Fig. 1, in cross section view as indicated with II in Fig 1.
Fig. 4 is a similar view as Fig. 1 of another sensor cable.
Fig. 4A shows optical fibre portions of the sensor cable of Fig. 4.
Figs. 5-6 and 7-8 indicate methods of operation of the sensor cable of Fig. 4, in section views as indicated with V and VII, respectively in Fig 4.
Fig. 9 shows a further embodiment of a sensor cable.
Fig. 9A shows optical fibre portions of the sensor cable of Fig. 9.
Figs. 10-11 and 12-13 indicate methods of operation of the sensor cable of Fig. 9;
Fig. 14 shows another embodiment of a sensor cable.
Figs. 15 and 16 show still another embodiment of a sensor cable.
Fig. 17 is a side view of a leaf spring including a sensor for detecting vehicle load of a vehicle.
Figs. 18a-c are enlarged top views of a part of the leaf spring of Fig. 17, illustrating different variants of a sensor.
Fig. 19 is a cross-sectional view of a part of a McPherson strut of an embodiment of the vehicle according to the invention.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

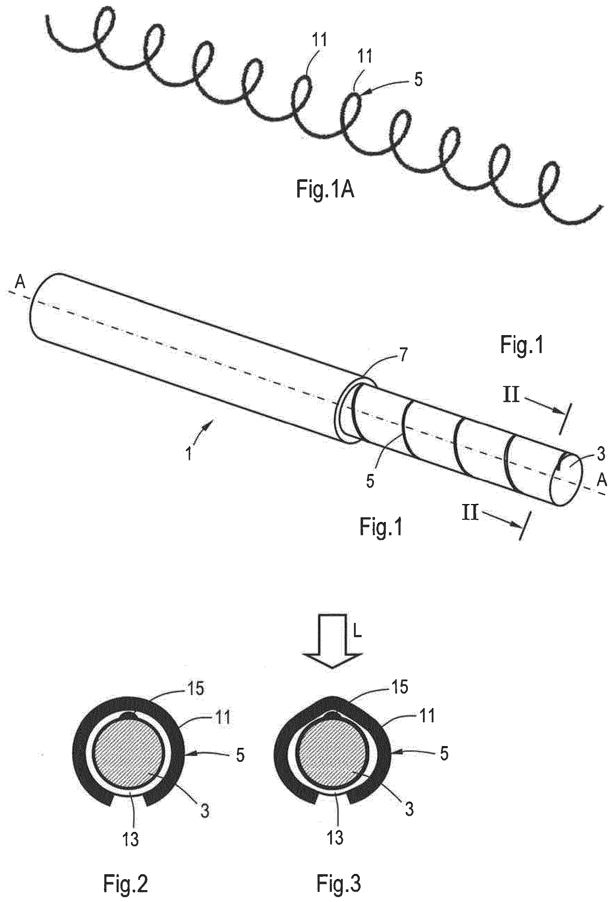

The present disclosure relates to a vehicle which comprises a vehicle body and a suspension including a sensor for detecting vehicle load. The sensor is provided with an optical fibre which is bendable, or at least deformable, upon varying the vehicle load in order to influence a light transmission property of the optical fibre. Figs. 1-16 show several embodiments of possible sensors to be discussed in detail later.

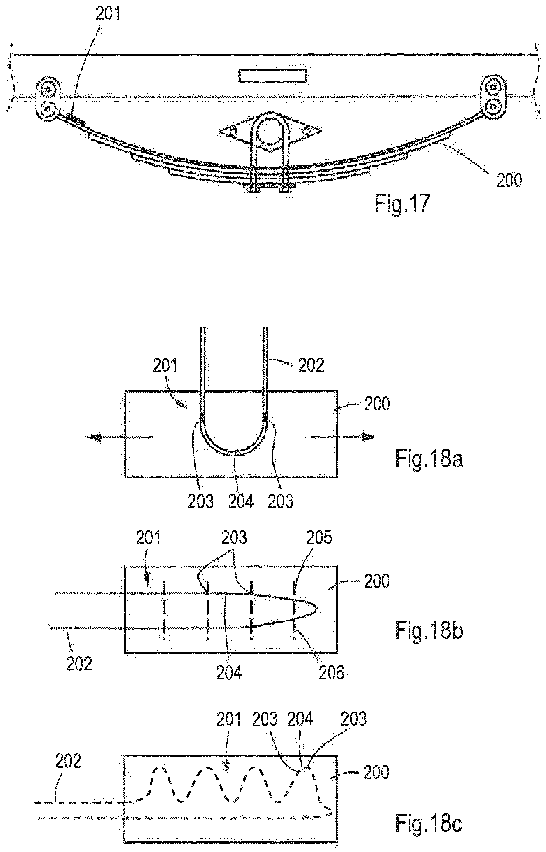

Fig. 17 shows a part of a suspension of a vehicle, more specifically a leaf spring 200. The rest of the suspension and the vehicle body are not shown. The leaf spring 200 is provided with a sensor 201 for detecting vehicle load which is mounted on the upper surface of the leaf spring 200. Fig. 18a illustrates in more detail how a sensor 201 may be mounted on the leaf spring 200 as seen from above. Furthermore, the sensor comprises a light source, a detector and a detector cable comprising the optical fibre.

The sensor 201 comprises an optical fibre 202 which has two static portions 203. The static portions 203 have fixed positions with respect to the upper surface of the leaf spring 200 and are located at a distance from each other in longitudinal direction of the leaf spring 200. The optical fibre 202 also comprises a resilient portion 204 which is bendable with respect to the static portions 203. The resilient portion 204 extends between the static portions 203 and is curved such that the loop extends transversely with respect to the longitudinal direction of the leaf spring 200.

Upon varying the vehicle load the upper surface of the leaf spring 200 will elastically deform in longitudinal direction due to bending of the leaf spring 200, as indicated with arrows in Fig. 18a. When the static portions 203 are displaced with respect to each other in longitudinal direction the radius of the curved resilient portion 204 will change. Consequently, optical transmission properties of the optical fibre 202 will change which can be detected. The resulting signal from the sensor 201 can be used for calculating the deformation of, and thus the load on, the leaf spring 200. The (optical fibre 202 of the) sensor 201 can be oriented and fixed to the leaf spring 200 in numerous alternative manners, e.g. mounting to an under side of the leaf spring 200 are equally conceivable and suitable.

It is noted that the variant as shown in Fig. 18a is very schematic. Generally, more or less static portions may be provided and the optical fibre 202 may have more and/or differently formed curves.

Fig. 18b shows an alternative sensor 201. In this case the optical fibre 202 is guided over a lattice 205. The lattice 205 is formed with rigid portions, here by rigid bars 206 extending transversely with respect to the longitudinal direction of the leaf spring 200, and it may be fixed to and/or be part of the leaf spring. The bars of the lattice 205 form rigid portions, like rigid portions 15 in an another sensor as shown in Figs. 1-3. At locations where the optical fibre 202 crosses the lattice 205, the optical fibre 202 forms its static portions 203. Between the bars of the lattice 205 the optical fibre 202 forms its resilient portions 204. When the leaf spring 200 bends, the optical fibre 202 will be locally deformed, generally most notably at or near the static portions 203. The static portions 203 will be shorter in longitudinal direction of the optical fibre 202 when the bars 206 of the lattice 205 are narrower in longitudinal direction of the leaf spring 200. This is a relatively simple variant, whereas it appears to provide an appropriate signal when mounted on the leaf spring 200.

Fig. 18c shows another sensor 201. In this case the optical fibre 202 is provided with a plurality of static portions 203 which are mutually spaced in longitudinal direction of the optical fibre 202. The static portions may be formed by rigid rings around the optical fibre 202. The rigid rings form rigid portions of the sensor to be discussed later. Instead of rigid rings, other rigid objects extending at least partly around the optical fibre, e.g. rings, clips, beads, providing local variations in thickness of the sensor cable may be provided. In such variant relatively rigid and relatively soft and resilient rings, clips, beads etc may be provided alternatingly, e.g. for reliably separating the rigid and soft or resilient portions along the fibre and/or so as to provide the sensor cable with a generally constant diameter in relaxed state. Also or alternatively a ribbed sheath surrounding the optical fibre may be provided. In another variant, a rigid wire or strip may be helically wound around the optical fibre with spaced winding turns. Thus, rigid portions and resilient portions of the sensor cable are integrated in a single cable. This facilitates positioning the sensor cable and it provides a sensor cable with a relatively low construction volume. A rigid portion encircling the optical fibre enables deformation of the fibre in response to a force acting on the fibre in any generally radial direction with respect to the longitudinal direction of the considered portion of the fibre. This further facilitates positioning the sensor cable.

Since the resilient portions 204 of the optical fibre 202 between two neighbouring static portions 203 are bendable with respect to the static portions 203, i.e. the fibre 202 being bendable about the rigid portions 206, the signal transmission property of the optical fibre 202 will change upon changing the vehicle load effecting a force on the sensor 201. In this case the static portions 203 of the optical fibre 202 may be fixed to the leaf spring 200 through attaching the rigid rings to the leaf spring 200. The resilient portions 204 of the optical fibre 202 are then bendable with respect to the static portions 203, or the leaf spring 200. The resilient portions 204 may be displaced with respect to the static portions by means of a resilient portion in the sensor that presses against the resilient portion 204 upon bending the leaf spring 200, for example a resin which is provided over the optical fibre 202.

The sensors 201 may be conveniently formed from a flexible material enclosing the sensor cable and possibly the light source and/or detector. In a variant the sensor is formed as an integral overmolded object, e.g. being encased in an artificial rubber and/or silicone layer, possibly comprising an integrated mounting portion like one or more eyes, straps loops etc. Such encased but at least partly deformable sensor facilitates mounting and it can be made robust and waterproof. The detector may comprise a cable for power and/or data transmission, but it can also operate battery-powered and/or wireless.

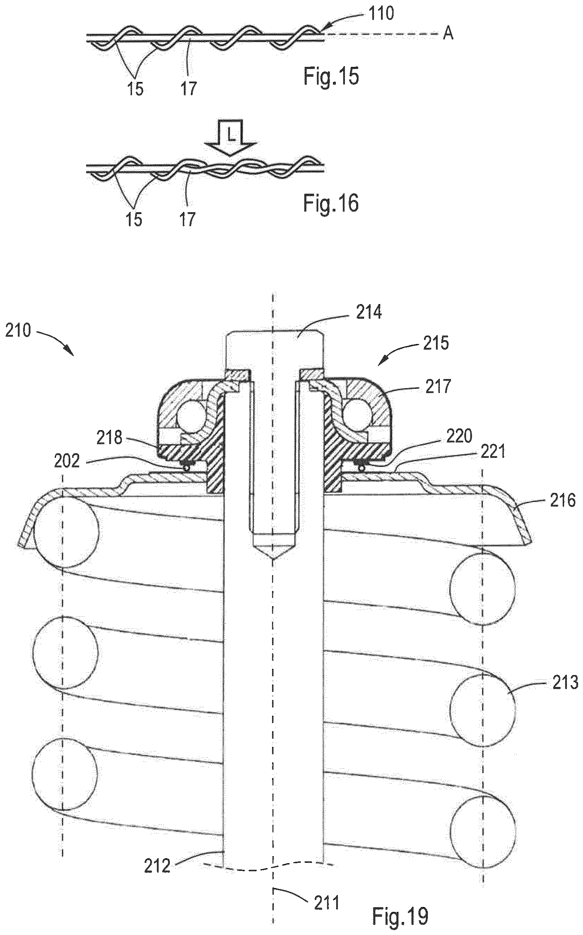

Fig. 19 shows a part of a suspension of an embodiment of the vehicle according to the invention. More specifically, Fig. 19 shows the upper part of a McPherson strut 210. A lot of modern motor vehicle suspension systems are provided with a McPherson strut supporting a vehicle on an axle and wheel. The McPherson strut 210 extends along a centre line 211 which is disposed in a substantially vertical direction when the wheel of the vehicle is resting on flat ground. Nevertheless, the centre line may be angled with respect to the vertical. The McPherson strut 210 has a shock absorber including a piston body (not shown) and a shock absorber piston rod 212, a coil spring 213 and a bolt 214. The McPherson strut 210 further includes a suspension thrust bearing device 215. The upper end of the shock absorber piston rod 212 has an internal screw thread along the centre line 211 for receiving the bolt 214. In assembled condition the bolt 214 fixes the shock absorber piston rod 212 and the thrust bearing device 215 to each other.

The coil spring 213 is disposed between the shock absorber piston body on the lower side and a cup 216 on the upper side. The coil spring 213 is wound around the shock absorber piston rod 212. The coil spring 213 is elastically deformable as a function of the vehicle load. The coil spring 213 exerts axial forces against the cup 216, which transmits these forces to the thrust bearing device 215.

The thrust bearing device 215 includes a ball bearing 217 and an intermediate member 218 disposed between the ball bearing 217 and the cup 216. The outer side of the ball bearing 217 is rigidly fixed to the vehicle body. Hence, the shock absorber piston rod 212 as well as the coil spring 213 exert vertical forces on the vehicle body through the thrust bearing device 215.

The ball bearing 217 enables axial forces to be transmitted between the coil spring 213 and the vehicle body, whilst allowing relative angular movement. This relative angular movement may be caused by compression of the coil spring 213 and/or of turning of steerable wheels. The ball bearing 217 minimizes forces and friction in the thrust bearing device 215 under operating conditions. The ball bearing 217 may be replaced by an alternative axial thrust bearing within the suspension thrust bearing device 215.

The intermediate member 218 is adapted to transmit to the bearing 217 essentially axial forces exerted on the suspension thrust bearing device 215 by the coil spring 213. It centres and retains the device 215 relative to the piston rod 212, as well. Preferably it is made of plastic material.

The sensor is preferably arranged at the upper part of a McPherson strut 210, in particular, the sensor cable or fibre. More in particular, at least part of the sensor cable may be comprised within the assembly of thrust bearing device 215 and one or more portions of the thrust bearing device 215 may cooperate to deform the fibre as a function of vehicle load. E.g., a portion of the sensor cable being held between the cup 216 and the intermediate member 218.

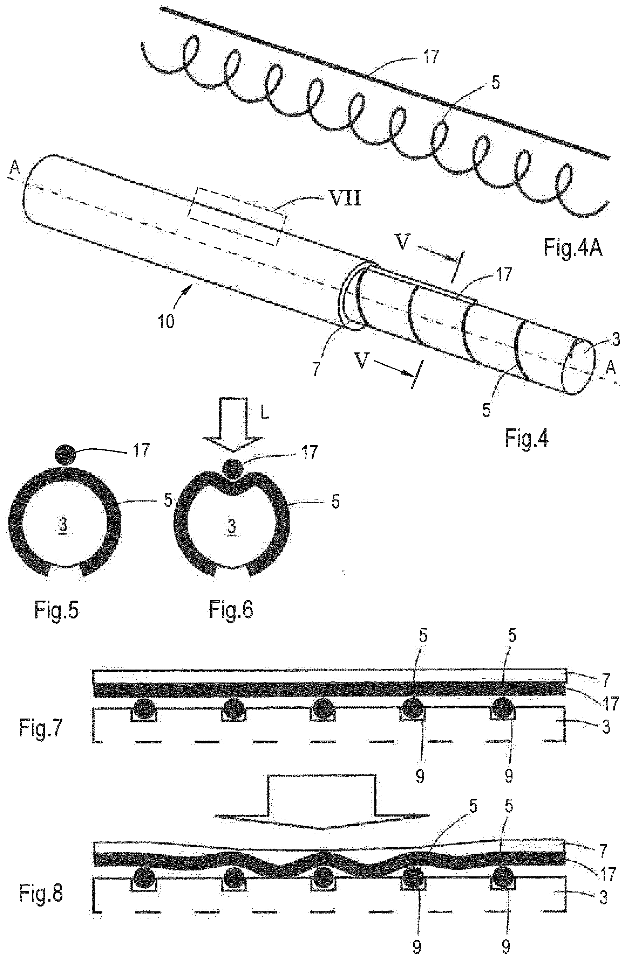

In the embodiment shown in Fig. 19, the intermediate member 218 is provided with a plurality of rigid portions 220 or cams at its bottom side, e.g. a plurality of protrusions and recesses. The rigid portions 220 are spaced with respect to each other in circumferential direction of the intermediate member 218. A soft layer 221 is provided on top of the cup 216 such that the optical fibre 202 is disposed between the soft layer 221 and the plurality of rigid portions 220. Also or alternatively, the cup 216 may comprise protrusions and depressions facing those of the intermediate member, preferably in generally interleaved relation. In case of increasing vehicle load the optical fibre 202 will bend about the rigid portions 220 hence changing the light transmission property. The soft layer 221 functions as a resilient portion of the sensor as discussed below. This type of sensor in fact functions in a similar way as the sensor shown in Figs. 7 and 8 to be explained in detail below. In an alternative embodiment, instead of the soft layer 221 the optical fibre 220 may be enveloped by a soft sheath to form the resilient portion of the sensor. The optical fibre and the sheath may then form a sensor cable like any one of the sensors as discussed below. The signal from the sensor can be used to calculate actual vehicle load.

In practice, in order to measure actual vehicle load the suspension may be provided with several optical sensors. The sensor types may be different, for example if the suspension at the front of a car comprises McPherson struts whereas at the rear it comprises leaf springs.

As mentioned hereinbefore the sensor for detecting vehicle load is provided with an optical fibre which is bendable upon varying the vehicle load. Such sensor may comprise a resiliently deformable optical fibre arranged over and/or between rigid portions. Figs. 1-16 show several other embodiments of possible sensors and will be discussed in detail below.

Fig. 1 shows a sensor cable 1 having a generally cylindrical shape with respect to an axis A. The cable 1 comprises a core 3, a bendable optical fibre 5 and a sheath 7 around the core 3 and the fibre 5. The fibre 5 is helically wound around the core 3 being received in a helical groove 9 around the core 3; Fig. 1A indicates the shape of the fibre 5. The fibre 5 and sheath 7 are bendable, and possibly also the core 3 so that the cable 1 as a whole is flexible.

The principle of operation of the sensor cable 1 is indicated in Figs. 2-3, which show a very schematic view of a slice of the sensor cable 1 without the sheath 7 comprising part of a winding 11 of the fibre 5 around the core 3 in an initial configuration. The core 3 (and/or the fibre 5) are further provided with a resilient layer 13, e.g. a (natural or artificial) rubber or plastic sheath, so that at least part of the fibre 5 is movable with respect to the core 3 and the axis A. In the groove 9 rigid portions 15 are provided (not shown in Fig. 1), e.g. in the form of corrugated bottom and/or wall portions and/or hard inclusions in the material of the core 3.

Visible in Fig. 3 is that under the influence of a varying external load on the sensor cable 1 (indicated with arrow L in Fig. 3) the fibre 5 is pressed against the core 3 and the rigid portion 15 so that the fibre 5 gets locally deformed. This affects the signal transmission properties of the fibre 5. In particular, light travelling through the fibre 5 may not experience the conditions for total internal reflection within the optical fibre 5 and part of the light may leak out of (the core of) the fibre 5 so that an optical signal sent through the deformed fibre 5 gets detectably attenuated. The deformation may also induce compression and/or or bending strain which may rotate a plane of polarisation of the light and/or induce chromatic dispersion for polychromic optical signals. When the load L is (partly) reduced, the fibre 5 is urged towards its initial shape (Figs. 1-2) by the resiliency of the respective materials.

In case of applying this sensor at the leaf spring 200 of Figs. 17-18, which does not belong to the present invention, the optical fibre 5 at the rigid portion 15 corresponds to a static portion 203 of the fibre 202 in Fig. 18, whereas the portion of the optical fibre 5 that bends next to the rigid portion 15 corresponds to a resilient portion 203 of the optical fibre 202 in Fig. 18. Note that providing more static and resilient portions may result in more and/or more strongly deformed portions and thus a stronger signal.

Fig. 4 shows another sensor cable 10, similar to the cable of Fig. 1, but, in addition to a first optical fibre portion 5 as in Fig. 1, being provided with a second optical fibre portion 17 which runs generally parallel to the axis A on a radially outward side of the first optical fibre portion 5, also being covered in the sheath 7. The relative positions of the first and second fibres 5, 17 are shown in Fig. 4A. The optical fibres 5, 17 cross at each winding of the first fibre 5, also indicated in Figs. 5-6 which show a cross sectional slice of the embodiment of Fig. 4 like Fig. 2-3, as indicated with V in Fig. 4, and indicated in Figs. 7-8 which show an axial slice of the embodiment, as indicated with VII in Fig. 4. The second fibre 17 may be supported by the first fibres 5 at a small distance from the core 3 as shown in Fig. 7, which distance may be empty or filled with a resiliently compressible material.

Each optical fibre 5, 17 is more rigid than the material of (a layer 13 around) the core 3 and the sheath 7 in transverse direction with respect to the direction of propagation of the fibre 5, 17, so that the fibre can flex and bend but is also largely incompressible.

Under the influence of a varying external load on the sensor cable 1 (see arrow L in Fig. 6) the fibres 5 and 17 get pressed against each other and against the core 3. Then, the second fibre 17, forming a relatively rigid portion against the first fibre 5 locally deforms the fibre 5, as indicated in Fig. 6. At the same time, the windings of the first fibre 5 form relatively rigid portions against which the second fibre 17 can be deformed (Fig. 8). The deformations detectably affect the signal transmission properties of the fibres 5, 17. When the load L is (partly) reduced, the fibres 5, 17 are restored towards their initial shapes (Figs. 4, 5, 7) by the resiliency of the respective materials.

The amount of deformation for each (affected portion of a) fibre 5, 17 is determined by the relative rigidities, flexibilities and/or dimensions of the parts (fibres 5, 17, core 3, sheath 7, grooves 9, layers 13 etc). It may be preferred that the first and second fibres 5, 17 are generally identical, possibly forming part of a single looped fibre (e.g. forward and return optical fibre portions).

Instead of or in addition a second fibre 17, another rigid object with similar position and function to the second fibre 17 may be provided, e.g. a rib or rod, an/or an electric cable, etc. One such rigid object may provide increased sensitivity in one direction, corresponding with the orientation of the rigid object. Plural such rigid objects distributed around the axis A facilitate detection of loads in different directions. It is noted that directionally dependent sensitivity may be beneficial for some situations, e.g. when the sensor cable is to be included in a plane structure for detecting forces within the plane or normal to the plane. For example, the sensor 201 as applied at the leaf spring 200 not belonging to the present invention, as described above, may be provided with such a sensor.

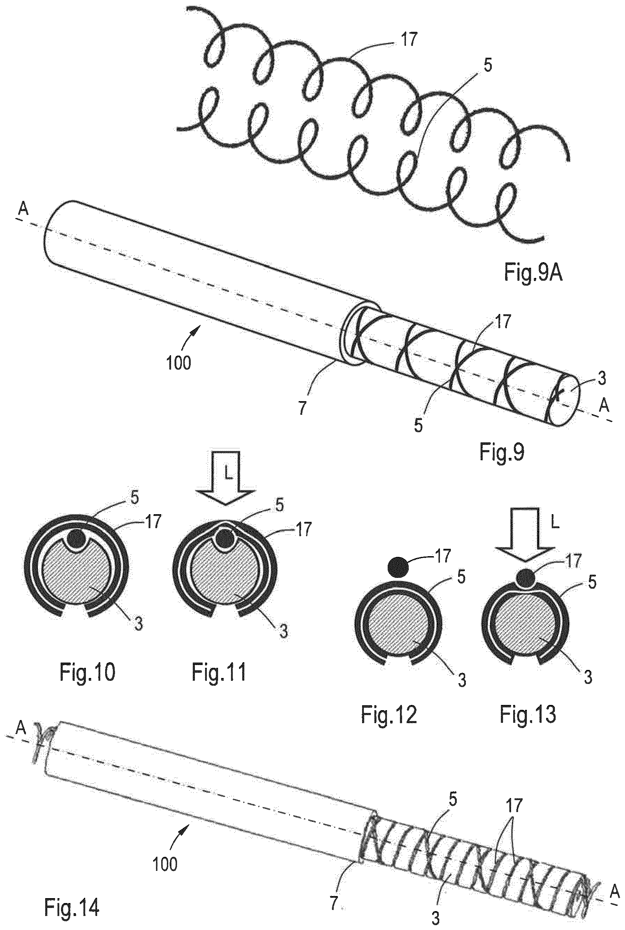

Fig. 9 shows another sensor cable 100, similar to the cable of Fig. 4, but here, the second fibre 17 is helically wound around the core 3 as well and overlaps the first fibre 5. The core 13 comprises grooves for both fibres 5, 17. The pitches of the helices are equal but the chiralities (handednesses) of the fibres 5, 17 with respect to the axis A are opposite (see also Fig. 9A), so that the fibres 5, 17 cross each other after each half turn.

At the crossing points the core may comprise relatively soft and/or resilient portions or recesses for accommodating deflection of one or both fibres 5, 17. Also or alternatively and as shown in Figs. 10-13 -see below- at least the inner fibre 5, preferably both the inner fibre 5 and outer fibre 17, may comprise a relatively soft and resilient outer sheath around a more rigid inner portion, obviating depth variations in the grooves. This facilitates manufacture and use.

At the crossings, the effects under influence of a load on the sensor cable 100 discussed with respect to Figs. 2-3 and with respect to Figs. 5-6 occur for each of the respective fibres 5, 17 simultaneously: the outer fibre 17 is pressed against the core and the inner fibre 5 by which it gets deformed due to the local relative rigidity of the inner fibre 5 (Figs. 10-11). At the same time, the inner fibre 5 is locally depressed and thereby deformed by the local relative rigidity of the outer fibre 17 (Figs. 12-13). Thus, both fibres 5, 17 are deformed and the signal transmission properties of both fibres 5, 17 are detectably affected.

Fig. 14 shows another sensor cable 100, similar to the cable of Fig. 4, but here, the pitches of the helices of both fibres differ in addition to the opposite chiralities (handednesses) of the fibres 5, 17 with respect to the axis A. Thus, the crossing points of both fibres 5, 17 are distributed around the axis A instead of lying on one or more straight lines as in Fig. 9 which may result in directionally dependent sensitivity. The circumferential distribution of Fig. 14 facilitates detection of loads in different directions.

The amount of deformation for each (affected portion of a) fibre 5, 17 is determined by the relative rigidities, flexibilities and/or dimensions of the parts (fibres 5, 17, core 3, sheath 7, grooves 9, layers 13 etc). In the embodiments of Figs. 4-14 it may be preferred that the first and second fibres 5, 17 are generally identical, possibly forming part of a single looped fibre (e.g. forward and return optical fibre portions). Thus, a signal transmitted through the fibre may be affected twice by the same load and signal detection may be increased.

Each of the sensor cables as illustrated in Figs. 1-14 may be applied in the intermediate member 218 of the McPherson strut 210 as shown in Fig. 19.

Figs. 15 and 16 show an embodiment of an optical fibre 110 wherein an optical fibre portion 5 is helically wound around another optical fibre portion 17 extending substantially axially along the axis A forming the core around which the first optical fibre portion is helically wound. Both optical fibre portions 5, 17 comprise a resilient sheath. Under the influence of a load L both optical fibres 5, 17 deform and provide rigid and resilient portions with respect to each other for reversibly deforming each other and affecting their respective transmission properties.

In an embodiment, one or more portions of the optical fibre, in particular in the resilient portion, may comprise an optical grating along the fibre, e.g. a distributed Bragg grating, which may act as an optical wavelength dependent filter with filtering characteristics dependent on the shape of and/or (in particular) longitudinal stress on the fibre. This provides a sensitive optical sensor, in particular in combination with a plurality of rigid portions for bending the fibre.

The invention is not restricted to the above described embodiments which can be varied in a number of ways within the scope of the claims. For instance a sensor cable may comprise more than two optical fibre portions, which may provide different helically wound portions, e.g. in identical and/or in different portions of the sensor cable.

Size relations may differ, e.g. a smaller sensor core diameter with respect to optical fibre portion(s). Suitable sizes comprise optical fibre diameters of about 1-5 mm and core sizes of 1-100 mm.

The suspension, in particular a McPherson strut comprising the optical sensor may be provided as a separate part, e.g. for refurbishing and/or retrofitting.

Elements and aspects discussed for or in relation with a particular embodiment may be suitably combined with elements and aspects of other embodiments, unless explicitly stated otherwise.

## Claims

1. A vehicle comprising a vehicle body and a suspension including a sensor for detecting vehicle load, wherein the sensor is provided with an optical fibre (202) which is deformable upon varying the vehicle load so as to influence light transmission property of the optical fibre, wherein the suspension comprises at least a spring (213), wherein the sensor is located at the spring,
wherein the spring (213) has a vertically oriented centre line (211), wherein the spring is a coil spring (213), wherein the optical fibre (202) extends in circumferential direction about the centre line (201), **characterized in that** the sensor has one or more rigid portions (220) and one or more resilient portions for bending the optical fibre with respect to the rigid portions (220),
wherein the sensor is accommodated in a spring seat of the coil spring,
wherein the rigid portions (220) are spaced in circumferential direction about the centre line.

2. A vehicle according to claim 1, wherein the coil spring (213) forms part of a McPherson strut (210) which has a shock absorber including a piston body and a shock absorber piston rod (212), an axial thrust bearing (217) which is rigidly fixed to the vehicle body and to an upper end of the shock absorber piston rod (212), wherein the coil spring (213) is disposed between the piston body on the lower side and a cup (216) on the upper side and wound around the shock absorber piston rod (212), an intermediate member (218) disposed between the axial thrust bearing (217) and the cup (216), wherein the sensor is located between the cup (216) and the intermediate member (218).

3. A vehicle according to claim 2, wherein the intermediate member (218) is provided with a plurality of the rigid portions (220) at its bottom side in the form of a plurality of protrusions and recesses, wherein a soft layer (221) is provided on top of the cup (216) such that the optical fibre (202) is disposed between the soft layer (221) and the plurality of rigid portions (220) or wherein the optical fibre (220) is enveloped by a soft sheath.

4. A vehicle according to claim 3, wherein the cup (216) comprises protrusions and depressions facing those of the intermediate member (218), preferably in generally interleaved relation.

5. A vehicle suspension for a vehicle according to one of the preceding claims, including a sensor for detecting vehicle load on the suspension when mounted to the vehicle, wherein the sensor is provided with an optical fibre which is deformable upon varying the vehicle load so as to influence light transmission property of the optical fibre when the suspension is mounted to the vehicle, wherein the suspension comprises at least a spring (213), wherein the sensor is located at the spring,
wherein the spring (213) has a vertically oriented centre line (211), wherein the spring is a coil spring (213), wherein the optical fibre (202) extends in circumferential direction about the centre line (201), **characterized in that** the sensor has one or more rigid portions (220) and one or more resilient portions for bending the optical fibre with respect to the rigid portions (220),
wherein the sensor is accommodated in a spring seat of the coil spring, wherein the rigid portions (220) are spaced in circumferential direction about the centre line.

## Patentansprüche

1. Fahrzeug, mit einer Fahrzeugkarosserie und einer Aufhängung mit einem Sensor zum Erfassen einer Fahrzeuglast, wobei der Sensor eine optische Faser (202) aufweist, die bei einer Veränderung der Fahrzeuglast verformbar ist, wodurch die Lichtübertragungseigenschaft der optischen Faser beeinflusst wird, wobei die Aufhängung mindestens eine Feder (213) aufweist, wobei der Sensor an der Feder angeordnet ist,
wobei die Feder (213) eine vertikal ausgerichtete Mittellinie (211) aufweist, wobei die Feder eine Schraubenfeder (213) ist, wobei sich die optische Faser (202) in der Umfangsrichtung um die Mittellinie (201) erstreckt,
**dadurch gekennzeichnet, dass**
der Sensor einen oder mehrere starre Abschnitte (220) und einen oder mehrere elastische Abschnitte zum Biegen der optischen Faser in Bezug auf die starren Abschnitte (220) aufweist,
wobei der Sensor in einem Federsitz der Schraubenfeder aufgenommen ist,
und
wobei die starren Abschnitte (220) in der Umfangsrichtung um die Mittellinie beabstandet sind.

2. Fahrzeug nach Anspruch 1, wobei die Schraubenfeder (213) einen Teil eines McPherson-Federbeins (210) bildet, das einen Stoßdämpfer mit einem Kolbenkörper und einer Stoßdämpferkolbenstange (212), ein Axialdrucklager (217), das starr an der Fahrzeugkarosserie und an einem oberen Ende der Stoßdämpferkolbenstange (212) befestigt ist, wobei die Schraubenfeder (213) zwischen dem Kolbenkörper auf der Unterseite und einem Teller (216) auf der Oberseite angeordnet und um die Stoßdämpferkolbenstange (212) gewickelt ist, und ein Zwischenelement (218) aufweist, das zwischen dem Axialdrucklager (217) und dem Teller (216) angeordnet ist, wobei der Sensor zwischen dem Teller (216) und dem Zwischenelement (218) angeordnet ist.

3. Fahrzeug nach Anspruch 2, wobei das Zwischenelement (218) mehrere der starren Abschnitte (220) an seiner Unterseite in der Form mehrerer Vorsprünge und Vertiefungen aufweist, wobei eine weiche Schicht (221) auf einer Oberseite des Tellers (216) bereitgestellt ist, so dass die optische Faser (202) zwischen der weichen Schicht (221) und den mehreren starren Abschnitten (220) angeordnet ist, oder wobei die optische Faser (220) von einer weichen Hülle umschlossen ist.

4. Fahrzeug nach Anspruch 3, wobei der Teller (216) Vorsprünge und Vertiefungen aufweist, die denjenigen des Zwischenelements (218), vorzugsweise in einer allgemein verschachtelten Beziehung, zugewandt sind.

5. Fahrzeugaufhängung für ein Fahrzeug nach einem der vorangehenden Ansprüche, mit einem Sensor zum Erfassen einer auf die Aufhängung ausgeübten Fahrzeuglast, wenn sie am Fahrzeug montiert ist, wobei der Sensor eine optische Faser aufweist, die bei einer Änderung der Fahrzeuglast verformbar ist, um die Lichtübertragungseigenschaft der optischen Faser zu beeinflussen, wenn die Aufhängung am Fahrzeug montiert ist, wobei die Aufhängung mindestens eine Feder (213) aufweist, wobei der Sensor an der Feder angeordnet ist,
wobei die Feder (213) eine vertikal ausgerichtete Mittellinie (211) aufweist, wobei die Feder eine Schraubenfeder (213) ist, wobei sich die optische Faser (202) in der Umfangsrichtung um die Mittellinie (201) erstreckt,
**dadurch gekennzeichnet, dass**
der Sensor einen oder mehrere starre Abschnitte (220) und einen oder mehrere elastische Abschnitte zum Biegen der optischen Faser in Bezug auf die starren Abschnitte (220) aufweist,
wobei der Sensor in einem Federsitz der Schraubenfeder aufgenommen ist, wobei die starren Abschnitte (220) in der Umfangsrichtung um die Mittellinie beabstandet sind.

## Revendications

1. Véhicule comprenant un corps de véhicule et une suspension comportant un capteur pour détecter une charge de véhicule, dans lequel le capteur est doté d'une fibre optique (202) qui est déformable lors d'une variation de la charge de véhicule de manière à influencer une propriété de transmission de lumière de la fibre optique, dans lequel la suspension comprend au moins un ressort (213), dans lequel le capteur est situé au niveau du ressort,
dans lequel le ressort (213) a un axe (211) orienté verticalement, dans lequel le ressort est un ressort (213) à enroulement, dans lequel la fibre optique (202) s'étend dans une direction circonférentielle autour de l'axe (201), **caractérisé en ce que** le capteur a une ou plusieurs parties rigides (220) et une ou plusieurs parties élastiques pour courber la fibre optique par rapport aux parties rigides (220),
dans lequel le capteur est contenu dans un siège de ressort du ressort à enroulement,
dans lequel les parties rigides (220) sont espacées dans une direction circonférentielle autour de l'axe.

2. Véhicule selon la revendication 1, dans lequel le ressort (213) à enroulement fait partie d'une jambe de force McPherson (210) qui a un amortisseur comportant un corps de piston et une tige de piston d'amortisseur (212), un palier de poussée axiale (217) qui est fixé de manière rigide au corps de véhicule et à une extrémité supérieure de la tige de piston d'amortisseur (212), dans lequel le ressort (213) à enroulement est disposé entre le corps de piston sur le côté inférieur et une coupe (216) sur le côté supérieur et enroulé autour de la tige de piston d'amortisseur (212), un élément intermédiaire (218) disposé entre le palier de poussée axiale (217) et la coupe (216), dans lequel le capteur est situé entre la coupe (216) et l'élément intermédiaire (218).

3. Véhicule selon la revendication 2, dans lequel l'élément intermédiaire (218) est doté d'une pluralité des parties rigides (220) au niveau de son côté de dessous sous la forme d'une pluralité de saillies et de creux, dans lequel une couche souple (221) est prévue sur le dessus de la coupe (216) de sorte que la fibre optique (202) soit disposée entre la couche souple (221) et la pluralité de parties rigides (220) ou dans lequel la fibre optique (220) est enveloppée par une gaine souple.

4. Véhicule selon la revendication 3, dans lequel la coupe (216) comprend des saillies et des creux faisant face à ceux de l'élément intermédiaire (218), de préférence dans une relation généralement intercalée.

5. Suspension de véhicule pour un véhicule selon l'une des revendications précédentes, comportant un capteur pour détecter une charge de véhicule sur la suspension lorsqu'elle est montée sur le véhicule, dans lequel le capteur est doté d'une fibre optique qui est déformable lors d'une variation de la charge de véhicule de manière à influencer une propriété de transmission de lumière de la fibre optique lorsque la suspension est montée sur le véhicule, dans lequel la suspension comprend au moins un ressort (213), dans lequel le capteur est situé au niveau du ressort,
dans lequel le ressort (213) a un axe (211) orienté verticalement, dans lequel le ressort est un ressort (213) à enroulement, dans lequel la fibre optique (202) s'étend dans une direction circonférentielle autour de l'axe (201), **caractérisé en ce que** le capteur a une ou plusieurs parties rigides (220) et une ou plusieurs parties élastiques pour courber la fibre optique par rapport aux parties rigides (220),
dans lequel le capteur est contenu dans un siège de ressort du ressort à enroulement, dans lequel les parties rigides (220) sont espacées dans une direction circonférentielle autour de l'axe.
